# FASCICULE DE BREVET EUROPEEN

(11) **EP 0 490 720 B1**
(45) Date de publication et mention de la délivrance du brevet: **25.01.1995**
(21) Numéro de dépôt: 91403125.7
(22) Date de dépôt: 20.11.1991
(51) Int. Cl.: B60T 13/52

(54) **Ensemble d'un servomoteur d'assistance au freinage et d'un maître-cylindre**
Bremskraftverstärker-Hauptzylindereinheit
Combination of a brake booster and a master cylinder

(30) Priorité: 13.12.1990 FR 9015611
(43) Date de publication de la demande: 17.06.1992
(73) Titulaire: ALLIEDSIGNAL EUROPE SERVICES TECHNIQUES, 93700 Drancy (FR)
(72) Inventeur: Gautier, Jean-Pierre, F-93700 Drancy (FR); Perez, Miguel, F-93700 Drancy (FR); Verbo, Ulysse, F-93700 Drancy (FR)
(74) Mandataire: Bentz, Jean-Paul

(56) Documents cités:
- GB-A- 2 133 848
- GB-A- 2 194 008

## Description

La présente invention concerne les servomoteurs d'assistance au freinage et s'applique avantageusement à tous les véhicules automobiles dont le circuit de freinage est équipé d'un tel servomoteur.

Un servomoteur d'assistance au freinage de conception classique, comprend notamment une enveloppe extérieure dans laquelle une chambre avant et une chambre arrière sont formées de part et d'autre d'une membrane souple, fixée de façon étanche sur un piston creux mobile selon l'axe du servomoteur. Le servomoteur est monté, en règle générale, sur le tablier du compartiment moteur du véhicule. Un maître-cylindre est monté sur la face de l'enveloppe opposée au tablier. Cependant, les contraintes provoquées par l'espace réduit dans le compartiment moteur, ou les exigences des constructeurs automobiles, demandent que la longueur axiale de l'ensemble du servomoteur et du maître-cylindre soit réduite. On est alors contraint de réaliser des servomoteurs spéciaux ou des maîtres-cylindres spéciaux pour un type de véhicule donné. De plus, l'adaptation des véhicules pour disposer le poste de conduite à droite du véhicule pose également de nombreux problèmes d'encombrement, résolus généralement par des commandes par tringleries complexes.

On connaît du document FR-A-2 602 198 un servomoteur d'assistance au freinage dans lequel un maître-cylindre est intégré au servomoteur, dans une des chambres à dépression de ce dernier, ainsi qu'un levier d'inversion, de sorte que l'axe du maître-cylindre est transversal, et en particulier perpendiculaire à l'axe longitudinal du servomoteur.

Cette construction est complexe et onéreuse, et nécessite la conception d'un servomoteur et d'un maître-cylindre tout-à-fait particuliers.

On connaît par ailleurs du document GB-A-2 133 848 un système de leviers entre la tige de sortie d'un servomoteur et le piston d'un maître-cylindre, dans lequel le rapport de levier est modifié en cas de défaillance de la source de dépression, de façon à obtenir sensiblement une même force d'actionnement du maître-cylindre, au prix d'un allongement de la course de la pédale. Une telle construction nécessite aussi la conception d'éléments particuliers, et est encombrante puisqu'elle fait intervenir des éléments additionnels tels qu'un servocylindre et toute une tringlerie.

La présente invention a donc pour but de réaliser un ensemble d'un servomoteur d'assistance au freinage et d'un maître-cylindre qui permet que la longueur de l'ensemble soit réduite, et ce en utilisant des servomoteurs et des maîtres-cylindres de conception classique, c'est-à-dire sans leur apporter de modification.

Conformément à l'invention, ce résultat est obtenu au moyen d'un ensemble d'un servomoteur d'assistance au freinage et d'un maître-cylindre, le servomoteur comprenant dans une enveloppe au moins une paroi mobile qui divise de manière étanche l'intérieur de l'enveloppe en une chambre avant et une chambre arrière, un organe d'entrée destiné à être relié à une pédale de frein et déplaçant la paroi mobile et un organe de sortie actionnant un piston du maître-cylindre.

Selon l'invention, un organe de transfert est fixé sur la face avant de l'enveloppe à l'extérieur de celle-ci, et en ce que le maître-cylindre est fixé sur l'organe de transfert, cet organe de transfert étant actionné selon un premier axe (A-A) par l'organe de sortie du servomoteur et actionnant selon un second axe (B-B) le piston du maître-cylindre, l'organe de transfert comportant une partie munie d'ouvertures de fixation sur l'enveloppe du servomoteur identiques en position et dimensions à des ouvertures pratiquées dans une bride de fixation du maître-cylindre, pour que le servomoteur, l'organe de transfert et le maître-cylindre forment une construction modulaire.

Selon une caractéristique avantageuse de l'invention, les premier et second axes sont alors dans des plans différents.

D'autres caractéristiques, buts et avantages de la présente invention ressortiront de la description qui suit d'un mode de réalisation donné à titre d'exemple non limitatif, en référence aux dessins annexés sur lesquels :
- La figure 1 est une vue de dessus en coupe d'un mode de réalisation de l'invention,
- La Figure 2 est une vue de face en coupe partielle du mode de réalisation de la Figure 1, et

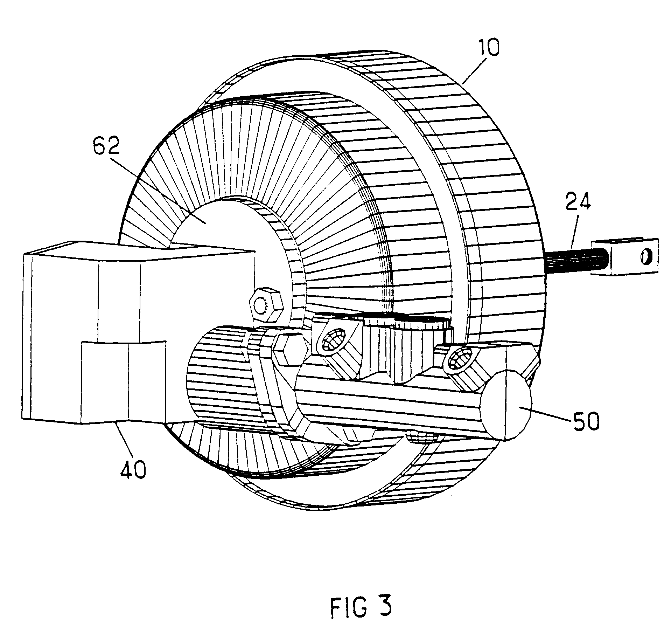

- La Figure 3 est une vue en perspective du mode de réalisation de la Figure 1.

Les Figures représentent un servomoteur double d' assistance au freinage prévu pour être placé de façon habituelle entre la pédale de frein d'un véhicule et le maître-cylindre commandant le circuit de freinage hydraulique. Par convention, on appelle avant du servomoteur la partie de ce dernier tournée vers le maître-cylindre, et arrière du servomoteur la partie tournée vers la pédale de frein.

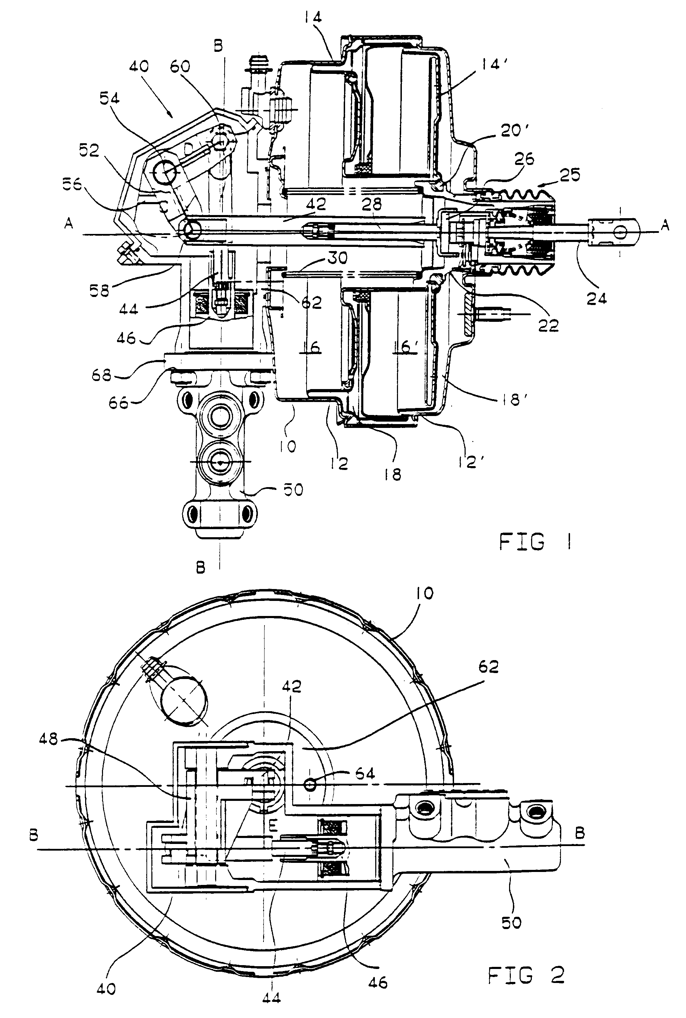

Le servomoteur comprend une enveloppe extérieure 10 en forme de coquille présentant sensiblement une symétrie de révolution autour d'un axe A-A. Deux membranes souples en élastomère 12, 12' renforcées dans leur partie centrale par des disques de support métallique 14, 14', définissent à l'intérieur de l'espace délimité par l'enveloppe 10 deux chambres avant 16, 16' et deux chambres arrière 18, 18'. Le bord périphérique intérieur 20' de la membrane 12' est monté sur un piston creux 22 qui est monté mobile à l'intérieur de l'enveloppe 10. Le servomoteur comprend de plus, une tige de commande 24 disposée selon l'axe A-A, dont une extrémité est destinée à être reliée à la pédale de frein (non-représentée). A l'intérieur de l'enveloppe 10 est disposé un moyen de valve classique 25 qui contrôle de façon connue le passage d'air vers la chambre arrière 18' lors d'une mise en oeuvre du servomoteur. Le piston creux 22 est relié, par l'intermédiaire d'un disque de réaction en élastomère 26 à un organe de sortie 28. Un ressort de rappel 30 disposé entre le piston creux 22 et la partie avant de l'enveloppe 10 assure que l'ensemble constitué du piston creux 22 et des membranes 12, 12' reprenne sa position de repos représentée sur la Figure 1. D'une façon classique, les chambres avant 16 et 16' communiquent entre elles, de même que les chambres arrière 18 et 18'.

Conformément à l'invention, on prévoit un organe de transfert pour réduire la longueur de l'ensemble formé par le servomoteur qui vient d'être décrit sur lequel on assemble un maître-cylindre.

L'organe de transfert, désigné dans son ensemble par la référence 40, comporte un organe d'entrée 42, actionné par l'organe de sortie 28 du servomoteur, et un organe de sortie 44, qui actionne un piston 46 d'un maître-cylindre 50. Entre les organes d'entrée 42 et de sortie 44 est disposé un moyen de levier formant renvoi d'angle qui, dans l'exemple représenté, est un renvoi d'équerre 52, qui est monté à basculement sur un pivot 54 fixé, par rapport à l'organe de transfert 40 sur un support 56. Le renvoi d'équerre 52 est sensiblement en forme de L dont une branche reçoit l'organe d'entrée 42 monté à basculement sur un pivot 58 et dont l'autre branche reçoit l'organe de sortie 44 monté à basculement sur son pivot 60.

Conformément à l'invention l'axe B-B de l'organe de sortie 44 est disposé à un angle par rapport à l'axe A-A de l'organe d'entrée 42. Dans l'exemple représenté, l'angle est égal à 90°. Ainsi, lors d'une mise en oeuvre du dispositif, un effort appliqué sur la pédale de frein (non représentée) provoque un déplacement axial de la tige de commande 24 qui, de façon connue, engendre un mouvement assisté de l'organe de sortie 28, également selon l'axe A-A. Ce mouvement est transformé par le renvoi d'équerre 52 en mouvement de l'organe de sortie 44 selon l'axe B-B. La distance sur laquelle la tige de sortie se déplace est fonction du rapport entre les distances C et D des trois pivots 54, 58 et 60 représentés sur la Figure 1. Il est donc possible de modifier le déplacement de l'organe de sortie 48, et l'effort appliqué sur le piston 46 du maître-cylindre, en modifiant le rapport des bras de levier C et D du renvoi d'équerre 32. Il est également possible de changer l'angle de sortie en modifiant simplement l'angle du renvoi 52. Afin de limiter l'effet du basculement de la tige de poussée 42 par rapport à l'axe A-A, le pivot 58 peut être disposé, dans sa position de repos représentée sur la Figure 1, légèrement au-dessus de l'axe A-A. Ainsi, lors de son déplacement, le lieu du pivot 40, en forme d'arc de cercle, reste sensiblement dans l'axe A-A.

Ainsi qu'il ressort des explications qui précèdent, l'organe de transfert 40 se fixe sur le servomoteur 10, et on fixe sur lui le maître-cylindre 50. Grâce à cette disposition avantageuse de l'invention, il est possible d'obtenir une construction modulaire : en formant dans la partie 62 de l'organe de transfert 40 des ouvertures 64 identiques en position et en dimension aux ouvertures 66 pratiquées dans la bride de fixation 68 du maître-cylindre 50, on pourra alors fixer l'organe de transfert 40 en lieu et place du maître-cylindre 50, puis fixer ce dernier sur l'organe de transfert, et ainsi utiliser des servomoteurs et des maîtres-cylindres connus sans leur apporter aucune modification. Il en résulte également qu'aucune modification de la fixation du servomoteur sur le tablier du véhicule n'est nécessaire, pas plus qu'une modification du réservoir de liquide de freinage qui pourra toujours être installé sur le maître-cylindre 50.

En fonction de l'espace disponible dans le compartiment moteur, il sera alors possible de réaliser des organes de transfert 40 différents pour adapter l'encombrement, et en particulier la longueur axiale, de l'ensemble servomoteur - maître-cylindre, sans modifier ces composants. Il est en particulier possible d'obtenir une distance E (Figure 2) entre les axes A-A et B-B de toute valeur souhaitée.

Bien qu'un seul mode de réalisation ait été représenté, il est évident que la présente invention est susceptible de recevoir de nombreuses variantes qui apparaîtront à l'homme de l'art. C'est ainsi que l'invention trouvera également son application à des servomoteurs simples aussi bien qu'à des servomoteurs doubles ou en tandem ainsi qu'on la décrit. De même, l'angle entre les axes A-A et B-B peut ne pas être égal à 90°.

## Revendications

1. Ensemble d'un servomoteur d'assistance au freinage et d'un maître-cylindre (50), le servomoteur comprenant dans une enveloppe (10) au moins une paroi mobile (14, 14') qui divise de manière étanche l'intérieur de l'enveloppe (10) en une chambre avant (16, 16') et une chambre arrière (18, 18'), un organe d'entrée (24) destiné à être relié à une pédale de frein et déplaçant la paroi mobile (18, 18') et un organe de sortie (28) actionnant un piston (46) du maître-cylindre (50), caractérisé en ce qu'un organe de transfert (40) est fixé sur la face avant de l'enveloppe (10) à l'extérieur de celle-ci, et en ce que le maître-cylindre (50) est fixé sur l'organe de transfert (40), cet organe de transfert (40) étant actionné selon un premier axe (A-A) par l'organe de sortie (28) du servomoteur et actionnant selon un second axe (B-B) le piston (46) du maître-cylindre (50), l'organe de transfert (40) comportant une partie (62) munie d'ouvertures (64) de fixation sur l'enveloppe (10) du servomoteur identiques en position et dimensions à des ouvertures (66) pratiquées dans une bride de fixation (68) du maître-cylindre (50), pour que le servomoteur, l'organe de transfert (40) et le maître-cylindre (50) forment une construction modulaire.

2. Ensemble selon la revendication 1, caractérisé en ce que les premier (A-A) et second (B-B) axes sont dans des plans différents.

3. Ensemble selon la revendication 1, caractérisé en ce que l'organe de transfert (40) comprend un moyen de levier (52) formant renvoi d'angle.

## Claims

1. Assembly consisting of a brake booster and of a master cylinder (50), the booster comprising, in a casing (10), at least one movable wall (14, 14') which sealingly divides the interior of the casing (10) into a front chamber (16, 16') and a rear chamber (18, 18'), an input member (24) intended to be connected to a brake pedal and displacing the movable wall (18, 18'), and an output member (28) actuating a piston (46) of the master cylinder (50), characterized in that a transfer member (40) is fixed on the front face of the casing (10) on the exterior of the latter, and in that the master cylinder (50) is fixed on the transfer member (40), this transfer member (40) being actuated by the output member (28) of the booster along a first axis (A-A) and actuating the piston (46) of the master cylinder (50) along a second axis (B-B), the transfer member (40) comprising a part (62) equipped with orifices (64) for fastening to the casing (10) of the booster which are identical in position and dimensions to orifices (66) made in a fastening flange (68) of the master cylinder (50), so that the booster, the transfer member (40) and the master cylinder (50) form a modular construction.

2. Assembly according to Claim 1, characterized in that the first (A-A) and second (B-B) axes are in different planes.

3. Assembly according to Claim 1, characterized in that the transfer member (40) comprises a lever means (52) forming a bell crank.

## Patentansprüche

1. Baugruppe eines Bremsunterstützungs-Servomotors und eines Hauptzylinders (50), wobei der Servomotor in einem Gehäuse (10) wenigstens eine bewegliche Wand (14, 14') aufweist, die in dichter Weise das Innere des Gehäuses (10) in eine vordere Kammer (16, 16') und eine hintere Kammer (18, 18') unterteilt, sowie ein Eingangsorgan (24), das dafür vorgesehen ist, mit einem Bremspedal verbunden zu werden, und das die bewegliche Wand (18, 18') verstellt, und ein Ausgangsorgan (28), das einen Kolben (46) des Hauptzylinders (50) betätigt, dadurch gekennzeichnet, daß an der vorderen Seite des Gehäuses (10) außerhalb des Gehäuses ein Übertragungsorgan (40) befestigt ist und daß der Hauptzylinder (50) am Übertragungsorgan (40) befestigt ist, wobei das Übertragungsorgan (40) entlang einer ersten Achse (A-A) vom Ausgangsorgan (28) des Servomotors betätigt wird und den Kolben (46) des Hauptzylinders (50) entlang einer zweiten Achse (B-B) betätigt, wobei das Übertragungsorgan (40) einen Teil (62) aufweist, der zur Befestigung am Gehäuse (10) des Servomotors mit Öffnungen (64) versehen ist, die in ihrer Position und in ihren Abmessungen mit in einer Befestigungsklammer (68) des Hauptzylinders (50) ausgebildeten Öffnungen (66) identisch sind, damit der Servomotor, das Übertragungsorgan (40) und der Hauptzylinder (50) eine Modulaufbau bilden.

2. Baugruppe nach Anspruch 1, dadurch gekennzeichnet, daß die erste Achse (A-A) und die zweite Achse (B-B) in verschiedenen Ebenen liegen.

3. Baugruppe nach Anspruch 1, dadurch gekennzeichnet, daß das Übertragungsorgan (40) ein Hebelmittel (52) aufweist, welches einen Winkeltrieb bildet.
